Europäisches Patentamt

European Patent Office

Office européen des brevets

(19)

(11) Veröffentlichungsnummer: **0 416 157 A1**

## (12) EUROPÄISCHE PATENTANMELDUNG

(21) Anmeldenummer: 89116572.2

(22) Anmeldetag: 07.09.89

(51) Int. Cl.5: **G02B 5/30**

(43) Veröffentlichungstag der Anmeldung:
**13.03.91 Patentblatt 91/11**

(84) Benannte Vertragsstaaten:
**CH DE FR GB IT LI SE**

(71) Anmelder: **Max-Planck-Gesellschaft zur Förderung der Wissenschaften e.V.
Bunsenstrasse 10
W-3400 Göttingen(DE)**

(72) Erfinder: **Keilmann, Fritz, Dr.-Dipl.-Physiker
Hagelsbrunnen 5a
W-7000 Stuttgart 80(DE)**

(74) Vertreter: **Schütz, Peter, Dipl.-Ing. et al
Dr. Dieter von Bezold Dipl.-Ing. Peter Schütz
Dipl.-Ing. Wolfgang Heusler Brienner Strasse 52
W-8000 München 2(DE)**

(54) Polarisator.

(57) Ein Infrarot-Polarisator in Form eines durchsichtigen Substrates (1) mit aufgebrachten Leiterstreifen (2) erlaubt bei einer Streifendicke (t) von mindestens etwa gleich dem Leiterstreifenabstand (g) gegenüber bisher üblichen dünneren Streifen eine wesentliche Vergrößerung des Polarisationskontrastes.

## POLARISATOR

Die Erfindung betrifft einen Polarisator für elektromagnetische Wellen mit den im Oberbegriff des Anspruchs 1 angegebenen Merkmalen.

Seit Heinrich Hertz benutzt man als Polarisator für elektromagnetische Wellen ein Gitter aus parallel gespannten Drähten. Damit keine gebeugten Strahlen entstehen, muß die Bedingung erfüllt sein, daß die räumliche Pericde g der Gitterstruktur kleiner als die benutzte Wellenlänge $\lambda$ gewählt wird. Mit der kleinsten heute verfügbaren Drahtstärke von 5 $\mu$m erreicht man im ferninfraroten ($\lambda \geq$ 100 $\mu$m) einen befriedigenden Polarisationskontrast von 100:1. Derartige Polarisationsgitter mit runden Drähten sind beispielsweise im J. Opt.Soc. Am. 71, 184 (1981) von J.A. Beunen et al. beschrieben.

Für Anwendungen in der Lasertechnik wird jedoch ein höherer Kontrast benötigt. Eine hierfür geeignetere Variante des Hertzschen Polarisators besteht darin, auf ein durchsichtiges Substrat dünne parallele Metallstreifen aufzudampfen, was heutzutage photolithisch mit einer räumlichen Periode von g = 0,8 $\mu$m möglich ist. Mit einem solchen Polarisator erreicht man für eine $CO_2$ Laserstrahlung ($\lambda$ = 10 $\mu$m) Kontraste bis 200:1.

Aus der US-PS 42 89 381 ist es bekannt, durch Aufeinanderschichten zweier solcher Streifengitter den Polarisationskontrast zu verbessern.

Die Aufgabe der Erfindung besteht in der Schaffung eines einfach aufgebauten Polarisations-Streifengitters, mit dem sich wesentlich höhere Kontraste erreichen lassen. Diese Aufgabe wird durch die im Kennzeichenteil des Anspruchs 1 angegebenen Merkmale gelöst. Spezielle Ausgestaltungen der Erfindung sind in den Unteransprüchen gekennzeichnet.

Während die bisher übliche Dicke der auf das Substrat aufgedampften Leiterstreifen in der Größenordnung von 0,2 $\mu$m liegt, werden die Leiterstreifen gemäß der Erfindung dicker ausgebildet, wobei sich überraschenderweise herausgestellt hat, daß sich dadurch der erreichbare Kontrast wesentlich verbessern läßt. Ein hieraus resultierender weiterer Vorteil der Erfindung besteht darin, daß man die räumliche Periode des Streifenmusters vergrößern kann, ohne daß man dann einen zu geringen Kontrast in Kauf nehmen müßte. Im oben genannten Beispiel eines $CO_2$ Lasers kann die Periode von g = 0,8 $\mu$m beispielsweise auf 4 $\mu$m vergrößert werden, so daß die Herstellung eines solchen Filters sich wesentlich einfacher gestaltet.

Die überraschende Kontrastverbesserung läßt sich bereits mit einer relativ geringen Zunahme der Schichtdicke t erreichen. So erhält man einen Polarisationskontrast von ca. 200:1 für alle Wellenlängen $\lambda \geq$ 2g, wenn man die Schichtdicke t etwa gleich der halben räumlichen Periode des Streifenmusters macht, also t etwa gleich dem Abstand zwischen benachbarten Leiterstreifen ist, wobei der Querschnitt des Zwischenraums zwischen zwei Leiterstreifen etwa quadratisch wird. Der oben genannte Kontrast reicht für viele Anwendungen aus, jedoch läßt er sich noch bedeutend erhöhen, wenn die Schichtdicke t weiter vergrößert wird: Eine Verdoppelung von t ergibt etwa eine quadratische Kontrastvergrößerung.

Für die Ausbildung der Metallstreifen der erfindungsgemäßen Dicke eignen sich zwei unterschiedliche Verfahren. Entweder bringt man homogene Metallfilme der gewünschten Dicke auf und ätzt streifenförmige Zwischenräume ein, oder man läßt die Metallstreifen bis zur gewünschten Dicke aufwachsen. In beiden Fällen erhält man jedoch keine senkrechten, sondern schräge Kanten der Metallstreifen, so daß das Profil der dazwischen befindlichen Schlitze trapezförmig wird. Obwohl sich dies verringernd auf den Kontrast auswirkt, kann man diese Verringerung durch eine entsprechende Erhöhung der Schichtdicke wieder ausgleichen, so daß hierin kein Nachteil zu sehen ist.

Der erfindungsgemäße Polarisator eignet sich insbesondere für Infrarotstrahlung im Bereich von 1 bis 1000 $\mu$m. Anwendungsgebiete sind beispielsweise Lasermeßtechnik, Photometrie, Astronomie und Strahlteiler für Fourierspektrometer. Versuche haben gezeigt, daß mit Streifendicken gemäß der Lehre der Erfindung der Polarisationskontrast um mindestens eine Zehnerpotenz gesteigert werden kann.

Die Erfindung sei nun anhand eines in der einzigen beiliegenden Zeichnung als Querschnitt veranschaulichten Ausführungsbeispiels näher erläutert.

Auf einem Substrat 1, das beispielsweise einer Kapton-oder Polyethylenfolie sein kann, ist ein Metallisierungsstreifenmuster aus Goldstreifen 2 aufgebracht, die hier eine Dicke von t = 1,8$\mu$m haben. Die räumliche Periode g beträgt 4 $\mu$m, so daß die Dicke t etwas geringer als eine halbe Periode g ist. Man erkennt, daß die Spalten oder Schlitze 3 zwischen jeweils zwei Goldstreifen 2 etwa so breit sind, wie die Schichtdicke t. Man erkennt ferner die herstellungsbedingt leicht schrägen Flanken 4 der Goldstreifen 2. Der mit diesen Abmessungen erreichte Polarisationskontrast im Ferninfrarot beträgt etwa 6000:1. Durch Vergrößern der Schichtdicke t läßt er sich noch erhöhen.

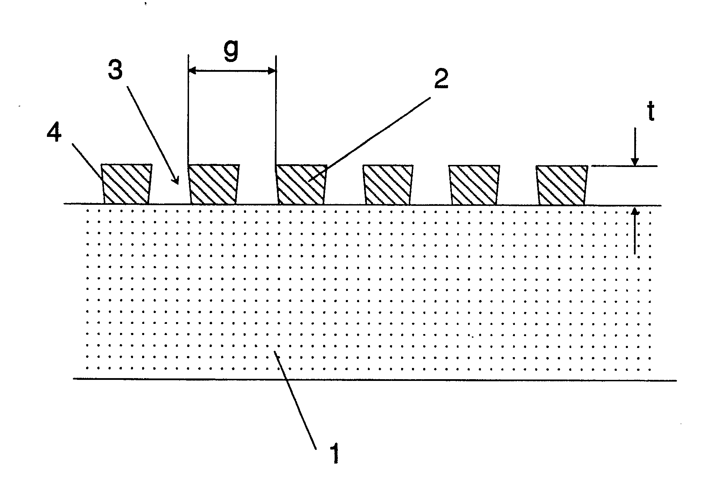

### Ansprüche

1. Polarisator für elektromagnetische Wellen mit einem transparenten Substrat, auf dem Leiterstreifen in geringem gegenseitigen Abstand aufgebracht sind, **dadurch gekennzeichnet**, daß die Dicke der Leiterstreifen (2) mindestens etwa gleich ihrem gegenseitigen Abstand ist.

2. Polarisator nach Anspruch 1, **dadurch gekennzeichnet**, daß die Dicke der Leiterstreifen (2) doppelt so groß wie der Leiterabstand ist.

3. Polarisator nach Anspruch 1, **dadurch gekennzeichnet**, daß die Periode (g) der Leiterstreifenstruktur beispielsweise etwa 4µm beträgt.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-2 224 214 (C.H. BROWN) <br> * Spalte 1, Zeilen 5-10; Ansprüche 3,4; Abbildungen 1-3 * <br> --- | 1,2 | G 02 B 5/30 |
| A | PATENT ABSTRACTS OF JAPAN <br> Band 9, Nr. 203 (P-381), 21. August 1985; & JP - A - 60 066 203 (MATSUSHITA DENKI) 16.04.1985 <br> --- | 1 | |
| A,D | US-A-4 289 381 (H.L. GARVIN et al.) <br> * Zusammenfassung; Spalte 4, Zeilen 65-68; Abbildung 3 * <br> --- | 1,3 | |
| A | INFRARED PHYSICS <br> Band 20, Nr. 4, Juli 1980, Seiten 215-222, Pergamon Press; W.A. CHALLENER et al.: "Grid polarizers for infrared fourier spectrometers" * Zusammenfassung; Seite 216, Absatz 2, Zeilen 1-8,17-19; Abbildung 1 * <br> ----- | 1-3 | |
| | | | **RECHERCHIERTE SACHGEBIETE (Int. Cl.5)** <br><br> G 02 B |

Der vorliegende Recherchenbericht wurde für alle Patentansprüche erstellt

| Recherchenort | Abschlußdatum der Recherche | Prüfer |
|---|---|---|
| BERLIN | 23-04-1990 | HYLLA W R |